# EUROPEAN PATENT APPLICATION

(11) **EP 1 965 082 A2**
(43) Date of publication of application: **03.09.2008**
(21) Application number: 08003575.1
(22) Date of filing: 27.02.2008
(51) Int. Cl.: F04D 29/058, F16C 39/06

(54) **Turbo-molecular pump and touchdown bearing device**

(30) Priority: 27.02.2007 JP 2007047204; 27.02.2007 JP 2007047205
(71) Applicant: JTEKT Corporation, Osaka-shi Osaka 542-8502 (JP)
(72) Inventor: Okuda, Kouichi JTEKT Corporation, Osaka-shi, Osaka 542-8502 (JP); Higashimoto, Osamu JTEKT Corporation, Osaka-shi, Osaka 542-8502 (JP)
(74) Representative: Görz, Ingo

(57) **Abstract**

A touchdown bearing device (10) includes an outer ring (31) fixed to a housing (2), an inner ring (33) radially opposed to the outer ring (31), an intermediate ring (32) radially interposed between the outer ring (31) and the inner ring (33), a first ball (39) interposed between the outer ring (31) and the intermediate ring (32), and a second ball (35) interposed between the intermediate ring (32) and the inner ring (33). The touchdown bearing device (10) is configured so that when a magnetic bearing (7,8) normally operate, a rotary shaft (3) and the inner ring (33) are brought into a non-contact state, and that meanwhile, when the magnetic bearing (7,8) does not normally operate, the rotary shaft (3) is supported by the inner ring (33) so as to support the rotary shaft (3) against the housing (2).

## Description

### BACKGROUND OF THE INVENTION

The present invention relates to a turbo-molecular pump, and to a touchdown bearing device for use in a turbo-molecular pump and a vacuum pump.

A conventional turbo-molecular pump is described in JP-A-2004-116558.

This turbo-molecular pump has a rotary shaft, a housing, magnetic bearings, and ball bearings serving as touchdown bearings. The magnetic bearings have electromagnets and magnetically support the rotary shaft in a non-contact manner during a normal operation.

On the other hand, each of the ball bearings has an inner ring, an outer ring and balls. The outer ring is internally fit into the inner peripheral surface of the housing, while the inner ring is noncontact with the rotary shaft when the magnetic bearings normally operate.

The ball bearings are configured so that when an error (human error) in operation of controlling the magnetic bearing or an electrical power failure causes the magnetic bearings not to normally operate, the outer peripheral surface of the rotary shaft is held by the inner peripheral surface of the inner ring to thereby mechanically support the rotary shaft with the housing.

In the turbo-molecular pump, vibrations are generated in the rotary shaft when the magnetic bearings are out of control. Thus, the rotary shaft is in biased contact with the inner ring of each of the ball bearings. Each of the ball bearings is such that upon a touchdown, the rotation speed of the inner ring is rapidly increased to a value close to a high rotation speed of a rotor by the friction between the rotary shaft and the inner ring so that the inner ring is rapidly and instantly accelerated from a stopped state. Thus, upon a touchdown, a large frictional force is generated between each ball and each of the rings. Consequently, the conventional turbo-molecular pump has problems that each ball of the bearings is apt to be locked against the associated ring, that seizure of the balls and the rings is liable to occur, and that reduction in the lifetime of the ball bearing is inevitable. Additionally, the rings are worn away by the balls, so that the rotary shaft may be in contact with a part of the housing, which is close to the rotary shaft. A touchdown bearing device is desired, which can causes a touchdown in the turbo-molecular pump at a higher rotation speed of the inner ring than a current rotation speed thereof, at which a touchdown is caused.

### SUMMARY OF THE INVENTION

Accordingly, a problem that the invention is to solve is to provide a turbo-molecular pump whose touchdown bearing device has a long lifetime. Another problem that the invention is to solve is to provide a touchdown bearing device that has a long lifetime and that can surely support a rotary shaft of a turbo-molecular pump at a speed of a predetermined number of revolutions per minute of the rotary shaft even in a case where the rotary shaft has a high rotation speed.

To achieve the foregoing object, according to an aspect of the invention, there is provided a turbo-molecular pump that includes:
a shaft;
a housing opposed to the shaft so as to be radially spaced from the shaft;
a magnetic bearing configured to magnetically support the shaft against the housing in a non-contact manner,
a touchdown bearing device provided between the housing and the shaft and configured to mechanically support the shaft when the magnetic bearing does not normally operate; and
a motor configured to perform relative rotation driving of the shaft with respect to the housing.
wherein the touchdown bearing device includes:
a first raceway member that is fixed to the housing and that has a raceway surface;
a second raceway member that is opposed to the first raceway member via a clearance and that has a raceway surface;
an intermediate raceway member that is provided between the first raceway member and the second raceway member and that has a first raceway surface opposed to the raceway surface of the first raceway member and has also a second raceway surface opposed to the raceway surface of the second raceway member;
first rolling elements provided between the raceway surface of the first raceway member and the first raceway surface of the intermediate raceway member; and
second rolling elements provided between the second raceway surface of the intermediate raceway member and the raceway surface of the second raceway member,
wherein the shaft and the second raceway member are in a noncontact state when the magnetic bearing normally operates, whereas the shaft is supported against the housing by supporting the shaft with the second raceway member when the magnetic bearing does not normally operate.

The housing is defined as a case with a member configured so as not to perform relative movement with respect to the case. The shaft can serve as a rotor of the motor and can constitute a part of the motor. The shaft and the rotor of the motor can be separate members. For example, the rotor of the motor can be a ring-like member. In addition, the ring-like rotor can be fixed to the outer peripheral surface of the shaft.

The first, second, third and fourth raceway members described above and below can be either rings or members each of which is obtained by attaching a separate component to a ring.

According to the invention, the first raceway member is brought into contact with the housing, and a load is applied from the shaft to the housing via the first raceway member, the first rolling elements, the intermediate raceway member (the second and fourth raceway members which is formed integrally or fixed each other), the second rolling elements, and the third raceway member. At a touchdown, both the rotation speed of the intermediate raceway member with respect to the first raceway member and that of the second raceway member with respect to the intermediate raceway member can rapidly be reduced to about half the rotation speed of the shaft at the touchdown.

Accordingly, at a touchdown, the rotation speed of the intermediate raceway member with respect to the first raceway member can considerably be reduced to about half the rotation speed of the inner ring with respect to the outer ring in the conventional touchdown bearing. Thus, the first rolling elements can be restrained from being locked to at least one of the first raceway member and the intermediate raceway member. Further, the rotation speed of the third raceway member with respect to the intermediate raceway member can dramatically be reduced to the rotation speed of the inner ring with respect to the outer ring in the conventional touchdown bearing. Thus, the second rolling elements can be restrained from being locked to at least one of the intermediate raceway member and the third raceway member. Consequently, the turbo-molecular pump according to the invention can considerably lengthen the lifetime of the touchdown bearing device, as compared with the conventional turbo-molecular pump.

Further, the turbo-molecular pump according to the invention can considerably reduce the rotation speed of the intermediate raceway member with respect to the first raceway member and that of the second raceway member with respect to the intermediate raceway member to about half the rotation speed of the rotary shaft at a touchdown, as compared with the conventional turbo-molecular pump. Consequently, the upper limit of the rotation speed of the rotary shaft, at which a touchdown can be caused, can dramatically be reduced, as compared with the conventional turbo-molecular pump.

Accordingly, as compared with the conventional configuration, i.e., the configuration in which the touchdown bearing device consists of the single inner ring, the single outer ring, and the rolling elements disposed between the outer ring and the inner ring, the configuration according to the invention can considerably reduce the possibility of occurrences of the contact between two different members, such as the contact between the magnetic bearing and the rotary shaft and the contact between the rotor and the stator, which constitute the motor.

According to the invention, when the seizure of at least one of the first raceway member, the second raceway surface of the intermediate raceway member, and the first rolling elements is caused, so that the intermediate raceway member does not normally rotate with respect to the first raceway member, the shaft can rotatably be supported against the housing by the third raceway member, the fourth raceway surface of the intermediate raceway member, and the second rolling elements. Conversely, when the seizure of at least one of the third raceway surface of the intermediate raceway member, the third raceway member, and the second rolling elements is caused, so that the third raceway member does not normally rotate with respect to the intermediate raceway member, the shaft can rotatably be supported against the housing by the first raceway member, the second raceway surface of the intermediate raceway member, and the first rolling elements. Accordingly, the turbo-molecular pump according to the invention can restrain the shaft to be put into contact with the touchdown bearing device from being worn away and being damaged, as compared with the conventional turbo-molecular pump.

According to another aspect of the invention, there is provided a touchdown bearing device includes:
a first raceway member that is fixed to the housing and that has a raceway surface;
a second raceway member that is opposed to the shaft so as to be spaced from the shaft, that is opposed to the first raceway member via a clearance, and that has a raceway surface;
an intermediate raceway member that is provided between the first raceway member and the second raceway member and that has a first raceway surface opposed to the raceway surface of the first raceway member and has also a second raceway surface opposed to the raceway surface of the second raceway member;
first rolling elements provided between the raceway surface of the first raceway member and the first raceway surface of the intermediate raceway member; and
second rolling elements provided between the second raceway surface of the intermediate raceway member and the raceway surface of the second raceway member,
wherein when the shaft and the second raceway member are put into contact with each other due to change in a relative position between the shaft and the housing, the shaft is supported against the housing by supporting the shaft with the second raceway member.

According to still another aspect of the invention, there is provided a turbo-molecular pump that includes:
a shaft;
a housing opposed to the shaft so as to be radially spaced from the shaft;
a magnetic bearing configured to magnetically support the shaft against the housing in a non-contact manner,
a touchdown bearing device provided between the shaft and the housing and configured to mechanically support the shaft when the magnetic bearing does not normally operate; and
a motor configured to perform relative rotation driving of the shaft with respect to the housing,
wherein the touchdown bearing device includes:
a first raceway member that is fixed to the shaft and that has a raceway surface;
a second raceway member that is opposed to the first raceway member via a clearance and that has a raceway surface;
an intermediate raceway member that is provided between the first raceway member and the second raceway member and that has a first raceway surface opposed to the raceway surface of the first raceway member and has also a second raceway surface opposed to the raceway surface of the second raceway member;
first rolling elements provided between the raceway surface of the first raceway member and the first raceway surface of the intermediate raceway member; and
second rolling elements provided between the second raceway surface of the intermediate raceway member and the raceway surface of the second raceway member,
wherein the housing and the second raceway member are in a noncontact state when the magnetic bearing normally operates, whereas the shaft is supported against the housing by supporting the second raceway member with the housing when the magnetic bearing does not normally operate.

The touchdown bearing device can be fixed to the shaft, to the housing, to the stationary side, or to the rotary side. In the case of this turbo-molecular pump.

According to yet another aspect of the invention, there is provided a touchdown bearing device that includes:
a first raceway member that is fixed to the shaft and that has a raceway surface;
a second raceway member that is opposed to the housing so as to be spaced from the housing, that is opposed to the first raceway member via a clearance, and that has a raceway surface;
an intermediate raceway member that is provided between the first raceway member and the second raceway member and that has a first raceway surface opposed to the raceway surface of the first raceway member and has also a second raceway surface opposed to the raceway surface of the second raceway member,
first rolling elements provided between the raceway surface of the first raceway member and the first raceway surface of the intermediate raceway member; and
second rolling elements provided between the second raceway surface of the intermediate raceway member and the raceway surface of the second raceway member,
wherein when the housing and the second raceway member are put into contact with each other due to change in a relative position between the shaft and the housing, the shaft is supported against the housing by supporting the second raceway member with the housing.

According to another aspect of the invention, there is provided a turbo-molecular pump that includes:
a shaft;
a housing opposed to the shaft so as to be radially spaced from the shaft;
a magnetic bearing configured to magnetically support the shaft against the housing in a non-contact manner;
a touchdown bearing device provided between the shaft and the housing and configured to mechanically support the shaft when the magnetic bearing does not normally operate; and
a motor configured to perform relative rotation driving of the shaft with respect to the housing,
wherein the touchdown bearing device includes:
a first raceway member fixed to the shaft;
a second raceway member opposed to the first raceway member;
first rolling elements provided between the first raceway member and the second raceway member,
a third raceway member fixed to the housing;
a fourth raceway member opposed to the third raceway member; and
second rolling elements provided between the third raceway member and the fourth raceway member; and
that the second raceway member and the fourth raceway member are in a noncontact state when the magnetic bearing normally operates, whereas the shaft is supported against the housing by supporting the second raceway member with the fourth raceway member when the magnetic bearing does not normally operate.

The housing is defined as a case with a member configured so as not to perform relative movement with respect to the case. The shaft can serve as a rotor of the motor and can constitute a part of the motor The shaft and the rotor of the motor can be separate members. For example, the rotor of the motor can be a ring-like member. In addition, the ring-like rotor can be fixed to the outer peripheral surface of the shaft.

The first, second, third and fourth raceway members described above and below can be either rings or members each of which is obtained by attaching a separate component to a ring.

According to the invention, a load applied from the shaft can be received by the housing via the first raceway member, the first rolling elements, the second raceway member, the fourth raceway member, the second rolling elements, and the third raceway member by supporting the second raceway member with the fourth raceway member. At a touchdown, both the rotation speed (relative rotation speed) of the first raceway member with respect to the second raceway member and that (relative rotation speed) of the fourth raceway member with respect to the third raceway member can rapidly be reduced to about half the rotation speed of the shaft at the touchdown.

Accordingly, at a touchdown, the invention can restrain the first rolling elements from being locked to at least one of the first raceway member and the second raceway member at a touchdown. Further, the invention can restrain the second rolling elements from being locked to at least one of the third raceway member and the fourth raceway member at a touchdown. Consequently, the turbo-molecular pump according to the invention can considerably lengthen the lifetime of the touchdown bearing device, as compared with the conventional turbo-molecular pump.

Further, the turbo-molecular pump according to the invention can considerably reduce each of the relative rotation speed between the first raceway member and the second raceway member and that between the third raceway member and the fourth raceway member to about half the associated relative speed in the conventional turbo-molecular pump. Consequently, the upper limit of the rotation speed of the rotary shaft, at which a touchdown can be achieved by the touchdown bearing device, can dramatically be increased, as compared with the conventional turbo-molecular pump. Accordingly, the turbo-molecular pump according to the invention can considerably reduce the possibility of occurrences of the contact between two different members, such as that between the magnetic bearing and the rotary shaft and that between the rotor and the stator, which constitute the motor.

According to the invention, when the seizure of at least one of the first raceway member, the second raceway member, and the first rolling elements is caused, so that the first raceway member does not normally rotate with respect to the second raceway member, the shaft can rotatably be supported against the housing by the third raceway member, the fourth raceway member, and the second rolling elements. Conversely, when the seizure of at least one of the third raceway member, the fourth raceway member, and the second rolling elements is caused, so that the fourth raceway member does not normally rotate with respect to the third raceway member, the shaft can rotatably be supported against the housing by the first raceway member, the second raceway member, and the first rolling elements. Accordingly, the turbo-molecular pump according to the invention can restrain the shaft to be put into contact with the touchdown bearing device from being worn away and being damaged, as compared with the conventional turbo-molecular pump.

According to another aspect of the invention, there is provided a touchdown bearing device that includes:
a first raceway member fixed to the shaft;
a second raceway member opposed to the first raceway member,
first rolling elements provided between the first raceway member and the second raceway member;
a third raceway member fixed to the housing;
a fourth raceway member that is opposed to the second raceway member so as to be spaced from the second raceway member and that is opposed to the third raceway member; and
second rolling elements provided between the third raceway member and the fourth raceway member,
wherein when the second raceway member and the fourth raceway member are put into contact with each other due to change in a relative position between the shaft and the housing, the shaft is supported against the housing by supporting the second raceway member with the fourth raceway member.

The turbo-molecular pump according to the invention can considerably lengthen the lifetime of the touchdown bearing device, as compared with the conventional turbo-molecular pump. Also, the touchdown bearing device according to the invention can dramatically increase the upper limit of the rotation speed of the shaft, at which a touchdown can be caused, as compared with the conventional device.

Further, the touchdown bearing device according to the invention can considerably lengthen the lifetime, in comparison with the conventional device. Also, the touchdown bearing device according to the invention can dramatically increase the upper limit of the rotation speed of the shaft, at which a touchdown can be caused, as compared with the conventional touchdown bearing device.

### BRIEF DESCRIPTION OF THE DRAWINGS

FIG. 1 is a cross-sectional view taken in an axial direction of a turbo-molecular pump according to the invention.
FIG. 2 is a schematic cross-sectional view illustrating a first touchdown bearing device shown in FIG. 1 and the vicinity thereof according to a first embodiment of the invention.
FIG. 3 is a schematic cross-sectional view illustrating a second touchdown bearing device shown in FIG. 1 and the vicinity thereof.
FIG. 4 is a partially schematic cross-sectional view illustrating a turbo-molecular pump according to a second embodiment of the invention.
FIG. 5 is a schematic cross-sectional view illustrating a first touchdown bearing device shown in FIG. 1 and the vicinity thereof according to a third embodiment.
FIG. 6 is a schematic cross-sectional view illustrating a second touchdown bearing device shown in FIG. 1 and the vicinity thereof.
FIG. 7 is a partially schematic cross-sectional view taken in an axial direction of a turbo-molecular pump according to a fourth embodiment of the invention.

### DETAILED DESCRIPTION OF PREFERRED EMBODIMENTS

Hereinafter, the invention is described in detail with reference to illustrated embodiments.

### First Embodiment

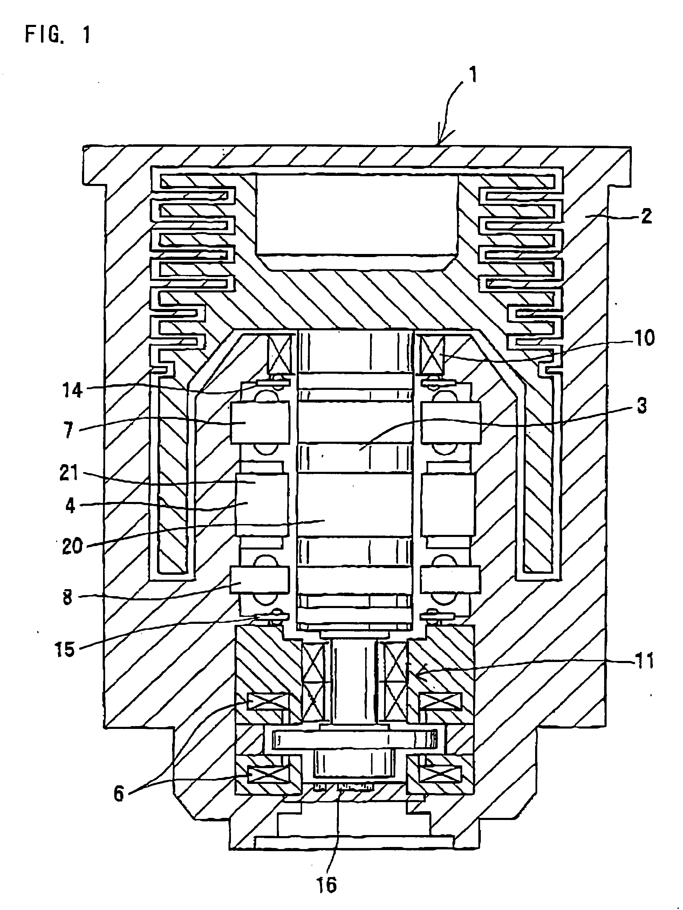

FIG. 1 is a cross-sectional view taken in an axial direction of a turbo-molecular pump according to the invention.

This turbo-molecular pump includes a turbo-molecular pump body 1 and a controller (not shown) and is communicated with vacuum equipment (not shown).

The turbo-molecular pump body 1 includes a housing 2, a rotary shaft 3 serving as the shaft, a motor 4 that drives the rotary shaft 3, an axial position detecting sensor 16, radial position detecting sensors 14 and 15, an axial magnetic bearing 6, first and second radial magnetic bearings 7 and 8, and first and second touchdown bearing devices 10 and 11 according to the first embodiment of the invention.

The axial position detecting sensor 16 detects the axial position of the rotary shaft 3 and outputs a signal representing the axial position of the rotary shaft 3 to the controller. Further, the radial position detecting sensors 14 and 15 are disposed in the axial direction of the rotary shaft 3 by being spaced apart from each other. The radial position detecting sensors 14 and 15 detect the radial positions of the rotary shaft 3 and output signals representing the radial positions of the rotary shaft 3 to the controller, respectively. The controller outputs a control signal to the axial magnetic bearing 6 according to a signal output from the axial position detecting sensor 16. The controller outputs also control signals to the first and second radial magnetic bearings 7 and 8 according to signals output from the radial position detecting sensors 14 and 15, respectively.

The motor 4 includes a rotor 20 and a stator 21. The rotor 20 is formed of a ring-like 2-pole permanent magnet and is fixed to the outer peripheral surface of the rotary shaft 3. The rotor 20 is caused by appropriately feeding electric current to the armature coil to rotate at high speed with respect to the stator 21. Thus, the rotary shaft 3, to which the rotor 20 is fixed, rotates at high speed.

The axial magnetic bearing 6 magnetically supports the rotary shaft 3 in the axial direction in a non-contact manner. More particularly, each of the axial magnetic bearings 6 have a pair of electromagnets (i.e., the number of the electromagnets is 2) disposed so as to sandwich an associated one of both end surfaces in the axial direction of the rotary shaft 3 from both sides in the axial direction. The electro-magnetic forces of the electromagnets of each of the axial magnetic bearings 6 are appropriately controlled according to control signals output from the controller. Each of the axial magnetic bearings 6 is such that the position of the rotary shaft 103 configured to rotate at a speed of several tens of thousands of revolutions per minute is precisely controlled in an axial direction so as to restrain the shaking in the axial direction of the rotary shaft 3. Thus, the rotary shaft 3 is precisely positioned at a predetermined position in the axial direction.

Meanwhile, the first and second radial magnetic bearings 7 and 8 magnetically support the rotary shaft 3 in the radial direction in a non-contact manner. More particularly, each of the first and second radial magnetic bearings 7 and 8 has two pairs of electromagnets (i.e., the number of the electromagnets of each of the radial magnetic bearings is 4) configured so that the rotary shaft 3 intervenes between the electromagnets of each pair in an associated radial direction, and that a line connecting the electromagnets of one of the two pairs is perpendicular to a line connecting the electromagnets of the other pair. The electro-magnetic forces of the electromagnets of the first and second radial magnetic bearings 7 and 8 are appropriately controlled according to control signals output from the controller. The first and second radial magnetic bearings 7 and 8 are such that the position of the rotary shaft 103 configured to rotate at a speed of several tens of thousands of revolutions per minute is precisely controlled in radial directions so as to restrain the shaking in the radial directions of the rotary shaft 3. Thus, the rotary shaft 3 is precisely positioned at a predetermined position in the radial directions.

The first touchdown bearing device 10 mechanically and radially supports the rotary shaft 3 when the first and second radial magnetic bearings 7 and 8 are out of control. Further, the second touchdown bearing device 11 mechanically, axially and radially supports the rotary shaft 3 when the axial magnetic gearing 6 or the first and second radial magnetic bearings 7 and 8 are out of control.

The first touchdown bearing device 10 and the second touchdown bearing device 11 surely prevent the contact between the rotary shaft 3 and each of the first and second radial magnetic bearings 7 and 8 and that between the rotor 20 and the stator 21 by supporting the rotary shaft 3 when the first and second radial magnetic bearings 7 and 8 are out of control.

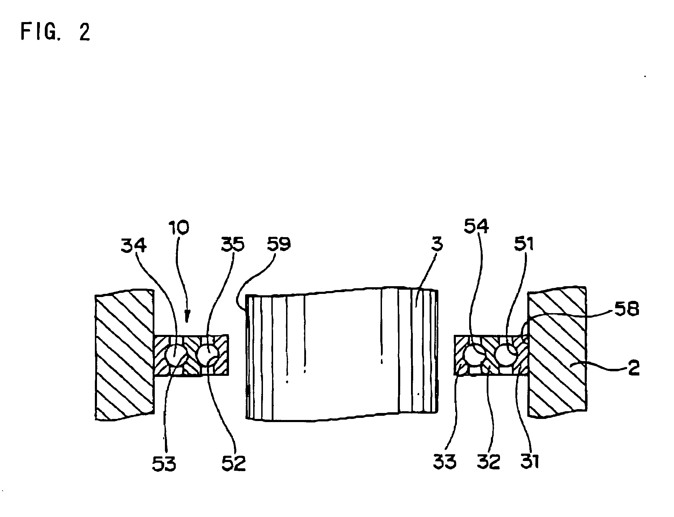

FIG. 2 is a schematic cross-sectional view illustrating the first touchdown bearing device 10 shown in FIG. 1 and the vicinity thereof.

The first touchdown bearing device 10 is interposed between the inner peripheral cylindrical surface 58 of the housing 2 and the outer peripheral surface 59 of the rotary shaft 3. The first touchdown bearing device 10 includes an outer ring 31 serving as a first raceway member, an intermediate ring 32 serving as an intermediate raceway member, an inner ring 33 serving as a second raceway member, a plurality of first balls 34 serving as first rolling elements, and a plurality of second balls 35 serving as second rolling elements.

The outer ring 31, the intermediate ring 32, and the inner ring 33 are made of a ferromagnetic material, such as a bearing steel (e.g., SUJ2), a stainless steel (e.g., SUS440C), or a tool steel (e.g., SKH4). Further, the first ball 34 and the second ball 35 are made of a ferromagnetic material, such as a bearing steel (e.g., SUJ2), or a tool steel (e.g., SKH4 or AISI (American Iron and Steel Institute) M50 (according to AISI standards) which excels in heat resistance). Incidentally, ferromagnetic materials are materials having the following properties. That is, when placed in a magnetic field, the ferromagnetic material is magnetized in the same direction as the magnetic field. Moreover, when the magnetic field is removed, the ferromagnetic material still remains magnetic.

In a case where the rings 31, 32, and 33 and the balls 34 and 35 made of ferromagnetic materials are used as the rings and the balls of the first touchdown bearing device 10, as described in the first embodiment, magnetic flux due to a magnetic field of the first and second radial magnetic bearings 7 and 8, which are disposed close to the first touchdown bearing device 10, can penetrate the inner ring 33, the second ball 35, the intermediate ring 32, the first ball 34, and the outer ring 31.

Accordingly, the first ball 34, the intermediate ring 32, the second ball 35, and the inner ring 33 can be attracted to the outer ring 31 fixed to the housing 2 by electro-magnetic forces. Thus, when the turbo-molecular pump is operated and when the radial magnetic bearings 7 and 8 are normally driven, the inner ring 33 can be prevented from rotating in accompaniment with the rotary shaft 3 having been magnetized at the assembly of the turbo-molecular pump. Therefore, no loud noises (no abnormal sounds) are generated, which would be generated at the occurrence of at least one of a relative rotation of the inner ring 33 with respect to the intermediate ring 32 and a relative rotation of the intermediate ring 32 with respect to the outer ring 31 (such relative rotations are not made by the present embodiment).

The outer ring 31 is fit into and fixed to the inner peripheral cylindrical surface 58 of the housing 2. The outer ring 31 has a deep groove type raceway groove 51 serving as a raceway surface, which is provided in the inner peripheral surface thereof. The inner ring 33 is placed inwardly in the radial direction of the outer ring 31. The inner ring 33 radially is opposed to the outer ring 31 through a clearance. The inner ring 33 has a deep groove type raceway groove 52 serving as a raceway surface, which is provided in the outer peripheral surface thereof.

The intermediate ring 32 is a cylindrical member. The intermediate ring 32 is radially disposed between the outer ring 31 and the inner ring 33. The intermediate ring 32 radially is opposed to the outer ring 31 through a clearance. Further, the intermediate ring 32 is radially opposed to the inner ring 33 through a clearance. The intermediate ring 32 has a deep groove type first raceway groove 53 serving as a first raceway surface, which is provided in the outer peripheral surface thereof. The intermediate ring 32 has also a deep groove type second raceway groove 54 serving as a second raceway surface, which is provided in the inner peripheral surface thereof.

The plurality of first balls 34 are circumferentially arranged between the raceway groove 51 of the outer ring 31 and the first raceway groove 53 of the intermediate ring 32 at intervals from one another. The plurality of second balls 35 are circumferentially arranged between the second raceway groove 54 of the intermediate ring 32 and the raceway groove 52 of the inner ring 33 at intervals from one another. The touchdown bearing device 10 has no retainer. Thus, the first balls 34 and the second balls 35 are not held by a retainer Consequently, the touchdown bearing device 10 increases loading capacity.

The turbo-molecular pump having the aforementioned configuration is such that when a power supply voltage is lowered by stopping the supply of electric power from a power supply due to an electric power malfunction or to an electric power failure, the motor 4 outputs a voltage as an electric generator. More specifically, when the power supply voltage is lowered, the motor 4 can supply regenerative electric power to position detecting sensors 14, 15, and 16, a magnetic bearing drive circuit (not shown) for each of the magnetic bearings 6, 7, and 8, and a motor driver (not shown). During the magnetic bearings 6, 7, and 8 can be driven by the regenerative electric power supplied from the motor 4, the magnetic levitation control of the magnetic bearings 6, 7, and 8 is performed using the regenerative electric power.

When the rotation speed of the motor 4 is lowered, so that the regenerative electric power supplied from the motor 4 is lower than regenerative electric power necessary for driving the magnetic bearings 7 and 8, the magnetic levitation control of the magnetic bearings 7 and 8 is stopped. When the magnetic levitation control of the magnetic bearings 7 and 8 is stopped, the first touchdown bearing device 10 radially and mechanically supports the rotary shaft 3, instead of the magnetic bearings 7 and 8. The second touchdown bearing device 11 serves to axially and mechanically support the rotary shaft 3 when the magnetic levitation control of the magnetic bearing 6 is stopped.

More particularly, the fist touchdown bearing device 10 operates as follows. When the magnetic levitation control of the magnetic bearings 7 and 8 is stopped, the outer peripheral surface of the rotary shaft 3 is put into contact with the inner ring 33. At a moment when the outer peripheral surface of the rotary shaft 3 touches the inner peripheral surface of the inner ring 33, i.e., at the instant when a touchdown of the rotary shaft 3 to the first touchdown bearing device 10 is caused, the rotation speed of the inner ring 33 is rapidly increased to a value close to that of the rotation speed of the rotary shaft 3 at the touchdown. Thus, the rotation speed of the intermediate ring 32 is rapidly increased to a value substantially half of the value of the rotation speed of the rotary shaft 3 at the touchdown.

That is, because the outer ring 31 is fixed to the housing 2 serving as a stationary member, both of the rotation speed of the intermediate ring 32 with respect to the outer ring 31 and the rotation speed of the inner ring 33 with respect to the intermediate ring 32 at the moment, at which a touchdown of the rotary shaft 3 to the first touchdown bearing device 10 is caused, are substantially half of the rotation speed of the rotary shaft 3 at the touchdown. Thus, in the first touchdown bearing device 10 according to the invention, both of the rotation speed of the intermediate ring 32 with respect to the outer ring 31 and the rotation speed of the inner ring 33 with respect to the intermediate ring 32, which are instantaneously generated at the touchdown, can rapidly be reduced to about half the rotation speed of the inner ring with respect to the outer ring in the conventional touchdown bearing device consisting of the outer and inner rings and the rolling elements.

According to the turbo-molecular pump according to the first embodiment, the contact of the rotary shaft 3 with the inner ring 33 enables the housing 2 to receive a load from the rotary shaft 3 via the inner ring 33, the second ball 35, the intermediate ring 32, the second ball 34, and the outer ring 31. Thus, at a touchdown, both of the rotation speed of the intermediate ring 32 with respect to the outer ring 31 and that of the inner ring 33 with respect to the intermediate ring 32 can rapidly be reduced to about half the rotation speed of the rotary shaft 3 at the touchdown, as compared with the conventional touchdown bearing device.

Accordingly, the first ball 34 can be prevented from being locked to at least one of the raceway groove 51 of the outer ring 31 and the first raceway groove 53 of the intermediate ring 32 at a touchdown. Also, the second ball 35 can be prevented from being locked to at least one of the second raceway groove 51 of the intermediate ring 32 and the raceway groove 52 of the inner ring 33 at the touchdown. Consequently, the lifetime of the touchdown bearing device 10 can dramatically be lengthened, as compared with the conventional touchdown bearing device.

Further, because each of the rotation speed of the intermediate ring 32 with respect to the outer ring 31 and that of the inner ring 33 with respect to the intermediate ring 32 is considerably reduced to about half the associated rotation speed of the conventional touchdown bearing device, the upper limit of the rotation speed of the rotary shaft 3, at which a touchdown can be caused, can dramatically be increased.

According to the turbo-molecular pump according to the first embodiment, even in a case where the seizure of at least one of the outer ring 31, the first raceway groove 53 of the intermediate ring 32, and the first balls 34 is caused, so that a normal relative rotation of the intermediate ring 32 with respect to the outer ring 31 is not normally performed, the rotary shaft 3 can rotatably be supported against the housing 2 by the second raceway groove 54 of the intermediate ring 32, the inner ring 33, and the second balls 35. Conversely, even in a case where the seizure of at least one of the second raceway groove 54 of the intermediate ring 32, the inner ring 33 and the second balls 35 is caused, so that a normal relative rotation of the inner ring 33 with respect to the intermediate ring 32 is not normally performed, the rotary shaft 3 can rotatably be supported against the housing 2 by the outer ring 31, the first raceway groove 53 of the intermediate ring 32, and the first balls 34.

Accordingly, as compared with the conventional configuration, i.e., the configuration in which the touchdown bearing device consists of the single inner ring, the single outer ring, and the balls disposed between the outer ring and the inner ring, the present embodiment can considerably reduce the possibility of occurrences of the contact between the rotary shaft 3 and each of the magnetic bearings 7 and 8 and the contact between the rotor 20 and the stator 21, which constitute the motor 4.

According to the touchdown bearing device of the first embodiment, each of the rotation speed of the intermediate ring 32 with respect to the outer ring 31 and that of the inner ring 33 with respect to the intermediate ring 32 can be reduced to about half that of the inner ring with respect to the outer ring in the conventional touchdown bearing device.

Moreover, an axial load applied from the rotary shaft 3 is generated when the rotary shaft 3 is brought into biased contact with the first touchdown bearing device 10 due to the runout of the rotary shaft 3. Both of a part of the axial load, which is to be allotted and applied to the raceway groove 51 of the outer ring 31, the first raceway 53 of the intermediate ring 32, and the first balls 34, and another part of the axial load, which is to be allotted and applied to the second raceway groove 54 of the intermediate ring 33, the raceway 52 of the outer ring 33, and the second balls 35, are reduced to small values that are about half the values of the parts of the axial load in the conventional touchdown bearing device, respectively, in which the ball bearing is arranged in a single stage.

Consequently, in comparison with the possibility of occurrence of the seizure of the outer and inner rings or the balls in the conventional touchdown bearing device, the possibility of occurrence of the seizure of the outer or inner ring 31 or 33, the intermediate ring 32, or the first or second balls 34 or 35 can considerably be reduced. Accordingly, the lifetime of the first touchdown bearing device 10 can dramatically be lengthened. Moreover, the upper limit of the rotation speed of the rotary shaft 3, at which a touchdown can be caused, can greatly be increased, as compared with the conventional touchdown bearing device.

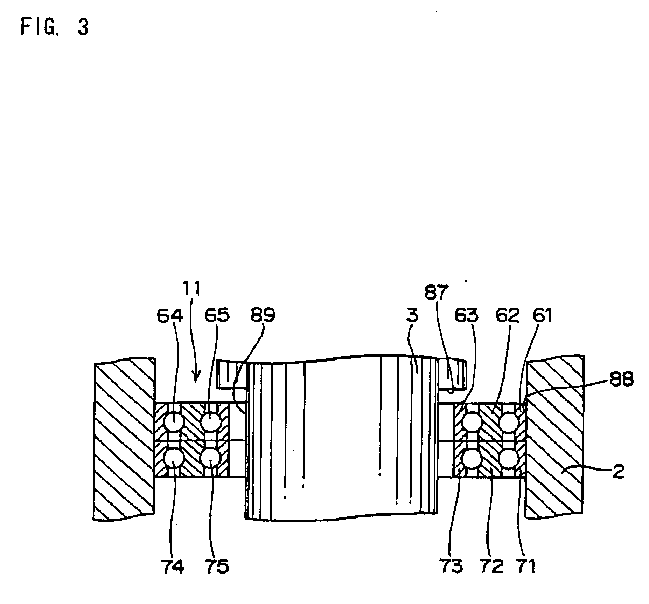

FIG. 3 is a schematic cross-sectional view illustrating the second touchdown bearing device 11 shown in FIG. 1 and the vicinity thereof.

The second touchdown bearing device 11 differs form the first touchdown bearing device 10 in that the first touchdown bearing device 10 is configured so as to be supported substantially only in a radial direction, whereas the second touchdown bearing device 11 is configured so as to be supported in both a radial direction and an axial direction. Thus, the material of a full complement ball bearing of the second touchdown bearing device 11 is selected from materials similar to the material used in the first touchdown bearing device. Further, although an operation of the second touchdown bearing device 11 is similar to that of the first touchdown bearing device 10, the second touchdown bearing device 11 differs from the first touchdown bearing device 10 in a structure to be supported in an axial direction, as described below.

The second touchdown bearing device 11 includes a second outer ring 61 having an angular raceway groove in an inner peripheral surface thereof, a second intermediate ring 62 having angular raceway grooves in inner and outer peripheral surfaces thereof, and a second inner ring 63 having an angular raceway groove in an outer peripheral surface, which are provided at one side in the axial direction (an upper side, as viewed in FIG. 3). A plurality of third balls 64 are arranged between the raceway groove of the second outer ring 61 and that provided in the outer peripheral surface of the second intermediate ring 62. A plurality of fourth balls 65 are arranged between the raceway groove in the inner peripheral surface of the second intermediate ring 62 and that of the second inner ring 63. On the other hand, the second touchdown bearing device 11 includes a third outer ring 71 having an angular raceway groove in an inner peripheral surface thereof, a third intermediate ring 72 having angular raceway grooves in inner and outer peripheral surfaces thereof, and a third inner ring 73 having an angular raceway groove in an outer peripheral surface, which are provided at one side in the axial direction (a lower side, as viewed in FIG. 3). A plurality of fifth balls 74 are arranged between the raceway groove of the third outer ring 71 and the raceway groove in the outer peripheral surface of the third intermediate ring 72. A plurality of sixth balls 75 are arranged between the raceway groove in the inner peripheral surface of the third intermediate ring 72 and the raceway groove of the third inner ring 73.

The second inner ring 63 and the third inner ring 73 are axially aligned. The second intermediate ring 62 and the third intermediate ring 72 are axially aligned. The second outer ring 61 and the third outer ring 71 are axially aligned. The rings 63, 73, 62, 72, 61, and 71 are fit into an inner peripheral surface 88 of the housing 2.

That is, the second touchdown bearing device 11 includes the second outer ring 61 and the third outer ring 71, which serve as the first raceway members, the second inner ring 63 and the third inner ring 73, which serve as the second raceway members, the second intermediate ring 62 and the third intermediate ring 72, which serve as the intermediate raceway members, the plurality of third balls 64 and the plurality of fifth balls 74, which serve as the first rolling elements, and a plurality of fourth balls 65 and a plurality of sixth balls 75, which serve as second rolling elements.

When the radial magnetic bearings 7 and 8 and the axial magnetic bearing 6 normally perform the magnetic control of the rotary shaft 3, the second inner ring 63 and the third inner ring 73 are placed radially outwardly from the peripheral surface 89 of the rotary shaft 3. In addition, the second inner ring 63 and the third inner ring 73 are placed so as to be spaced apart from an end surface 87 and as to be radially and axially opposed to the rotary shaft 3 in a non-contact manner.

When at least one of the magnetic levitation control performed using the radial magnetic bearings 7 and 8 and that performed using the axial magnetic bearing 6 is stopped, at least one of the contact between the second inner ring 63 and the peripheral surface 89 of the rotary shaft 3, that between the inner peripheral surface of the third inner ring 73 and the peripheral surface 89 of the rotary shaft 3, and that between an end surface at one side in the axial direction of the second ring 63 and the end surface 87 of the rotary shaft 3 is caused. Consequently, the rotary shaft 3 can mechanically be supported against the housing 2 in at least one of a radial direction and an axial direction.

According to the turbo-molecular pump according to the first embodiment, the second touchdown bearing device 11 can considerably suppress the relative rotation speed of each of the inner rings 63 and 73 with respect to an associated one of the intermediate rings 62 and 72 and that of each of the intermediate rings 62 and 72 with respect to an associated one of the outer rings 61 and 71 instantaneously generated upon a touchdown, similarly to the first touchdown bearing device 10. The second touchdown bearing device 11 can rapidly reduce the relative rotation speed of each of the inner rings 63 and 73 and the intermediate rings 62 and 72 to about half the rotation speed of the rotary shaft 3 at the touchdown. Consequently, the lifetime of the second touchdown bearing device 11 can dramatically be lengthened.

Furthermore, because the second touchdown bearing device 11 can rapidly reduce the relative rotation speed of each of the inner rings 63 and 73 and the intermediate rings 62 and 72 to about half the rotation speed of the rotary shaft 3 at the touchdown, the second touchdown bearing device 11 can dramatically increase the upper limit to the rotation speed of the rotary shaft 3, at which a touchdown can be caused.

According to the turbo-molecular pump according to the first embodiment, the rotary shaft 3 can be rotatably supported against the housing 2 by the raceway groove in the inner peripheral surface of the second intermediate ring 62, the second inner ring 63, the fourth balls 65, the raceway grooves in the intermediate ring 72, the third ring 73, and the sixth balls 75 even when the seizure of at least one of members including the second outer ring 61, the raceway groove in the outer peripheral surface of the second intermediate ring 62, the third balls 64, the third outer ring 71, the raceway groove in the outer peripheral surface of the third intermediate ring 72, and the fifth balls 74 is caused, so that at least one of the rotation of the second intermediate ring 62 with respect to the second outer ring 61 and that of the third intermediate ring 72 with respect to the third outer ring 71 is not normally performed. Conversely, the rotary shaft 3 can be rotatably supported against the housing 2 by the second outer ring 61, the raceway groove in the outer peripheral surface of the second intermediate ring 62, the third balls 64, the third outer ring 71, the raceway groove in the outer peripheral surface of the third intermediate ring 72, and the fifth balls 74 even when the seizure of at least one of members including the raceway groove in the inner peripheral surface of the second intermediate ring 62, the second inner ring 63, the fourth balls 65, the raceway grooves in the intermediate ring 72, the third ring 73, and the sixth balls 75 is caused, so that at least one of the rotation of the second inner ring 63 with respect to the second intermediate ring 62 and that of the third inner ring 73 with respect to the third intermediate ring 72 is not normally performed.

The second touchdown bearing device 11 according to the first, embodiment can considerably suppress the relative rotation speed of each of the inner rings 63 and 73 with respect to an associated one of the intermediate rings 62 and 72 and that of each of the intermediate rings 62 and 72 with respect to an associated one of the outer rings 61 and 71 instantaneously generated upon a touchdown, similarly to the first touchdown bearing device 10, The second touchdown bearing device 11 can rapidly reduce the relative rotation speed of each of the inner rings 63 and 73 and the intermediate rings 62 and 72 to about half the rotation speed of the rotary shaft 3 at the touchdown. Accordingly, the lifetime of the second touchdown bearing device 11 can dramatically be lengthened.

Further, because the second touchdown bearing device 11 can swiftly reduce the relative rotation speed of each of the inner rings 63 and 73 and the intermediate rings 62 and 72 to about half the rotation speed of the rotary shaft 3 at the touchdown, the second touchdown bearing device 11 can dramatically increase the upper limit to the rotation speed of the rotary shaft 3, at which a touchdown can be caused.

Incidentally, in the turbo-molecular pump according to the first embodiment, the first touchdown bearing device 10 and the second touchdown bearing device 11 are fixed to the inner peripheral surface of the housing 2 that is a stationary member. However, according to the invention, the touchdown bearing devices can be fixed to the rotary shaft.

Further, the touchdown bearing device 10 according to the first embodiment is configured so that the outer ring 31 and the outer peripheral surface of the intermediate ring 32 have the deep groove type raceway grooves 51 and 53, respectively, and that the inner peripheral surface of the intermediate ring 32 and the inner ring 33 have the deep groove type raceway grooves 52 and 54, respectively. However, according to the invention, at least one of the outer ring, the outer peripheral surface of the intermediate ring, the inner peripheral surface of the intermediate ring, and the inner ring has an angular type raceway groove, instead of a deep groove type raceway groove. In this case, it is preferable that a large axial load can be applied to the touchdown bearing device.

Each of the touchdown bearing devices 10 and 11 according to the first embodiment has no retainer. All of the first balls 34, the second balls 35, the third balls 64, the fourth balls 65, the fifth balls 74, and the sixth balls 75 are not held by a retainer. According to the invention, at least one (i.e., one or more) of the first balls 34, the second balls 35, the third balls 64, the fourth balls 65, the fifth balls 74, and the sixth balls 75 can be held by a retainer.

In the touchdown bearing devices 10 and 11 according to the first embodiment, all the first and second rolling elements are the balls, 34, 35, 64, 65, 74, and 75. However, according to the invention, at least one of the first and second balls can be a rolling element, such as a cylindrical roller, and a conical roller, other than a ball.

Further, in the touchdown bearing devices 10 and 11 according to the first embodiment, the intermediate rings 32, 62, and 72 are integral members each having two raceway grooves 53 and 54. However, according to the invention, the intermediate rings can be non-integral members. That is, the intermediate ring can be configured so as to include an outer ring and an inner ring which is a member separated from the outer ring, and as to fix the inner peripheral surface of the inner ring, which has a raceway surface on the outer periphery of the inner ring, to the outer ring, which has a raceway surface on the inner periphery.

Furthermore, the touchdown bearing devices 10 and 11 according to the first embodiment use the first balls 34, the second balls 35, the third balls 64, the fourth balls 65, the fifth balls 74, and the sixth balls 75, .which are made of a ferromagnetic material. According to the invention, a ball made of a nonmagnetic ceramic material, such as silicon nitride (Si₃N₄), can be used as at least one of the first balls 34, the second balls 35, the third balls 64, the fourth balls 65, the fifth balls 74, and the sixth balls 75. In the case of using the ceramic ball, the durability of the balls can be enhanced. Additionally, according to the invention, the material of all the inner and outer rings and the balls can be a stainless steel. In this case, the cost of the ball bearing can considerably be reduced.

### Second Embodiment

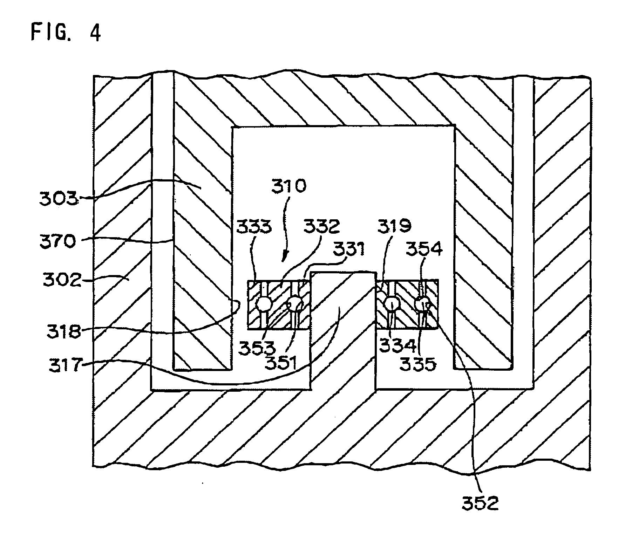

FIG. 4 is a partially schematic cross-sectional view illustrating a turbo-molecular pump according to a second embodiment of the invention.

This turbo-molecular pump includes a housing 302, a rotary shaft 303, and a touchdown bearing device 310 according to the second embodiment of the invention.

The turbo-molecular pump according to the second embodiment differs from the turbo-molecular pump 10 according to the first embodiment, in which the touchdown bearing device 10 according to the invention is interposed between the inner peripheral cylindrical surface 58 and the outer peripheral surface 59 of the rotary shaft 3, in that the touchdown bearing device 310 according to the invention is interposed between an inner peripheral surface 318 of a cylindrical portion, which constitutes a part of the rotary shaft 303, and an outer peripheral cylindrical surface 319 of a cylindrical portion 317 of the housing 302, which is positioned radially and inwardly from the inner peripheral surface 318.

The description of operations, advantages, and modifications, which are common to the turbo-molecular pump according to the first embodiment and that according to the second embodiment, is omitted. Only the operations, advantages, and configuration of the turbo-molecular pump according to the second embodiment, which differ from those of the turbo-molecular pump according to the first embodiment, are described below.

The touchdown bearing device 310 includes an inner ring 331 serving as the first raceway ring, an intermediate ring 332, an outer ring 333 serving as the second raceway ring, a plurality of first balls 334 serving as the first rolling elements, and a plurality of second balls 335 serving as the second rolling elements.

The plurality of first balls 334 are circumferentially arranged between a raceway groove 351 of the outer ring 331 and a first raceway groove 353 of the intermediate ring 332 at intervals from one another. Moreover, the plurality of second balls 335 are circumferentially arranged between a second raceway groove 354 of the intermediate ring 332 and a raceway groove 352 of the outer ring 333 at intervals from one another.

In the turbo-molecular pump according to the second embodiment, the touchdown bearing device 310 is placed radially and inwardly from an outer peripheral surface 370 of the rotary shaft 303. Thus, the turbo-molecular pump can be miniaturized.

In the first and second embodiments, the touchdown bearing devices 10 and 310 according to the invention are mounted in the turbo-molecular pump. However, apparently, the touchdown bearing device according to the invention can be mounted in a mere vacuum pump, instead of the turbo-molecular pump.

### Third Embodiment

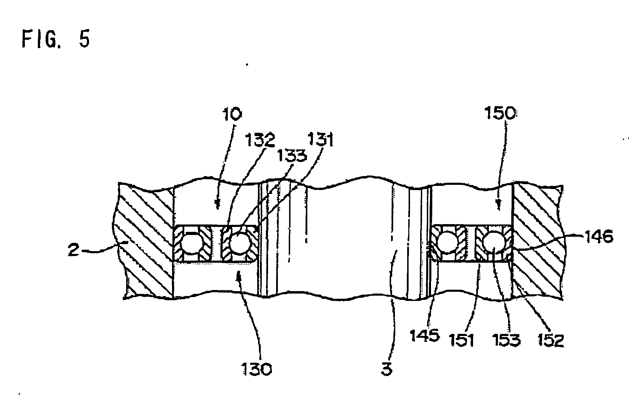

FIG. 5 is a partially schematic cross-sectional view illustrating a turbo-molecular pump according to a third embodiment of the invention.
In the following description of the turbo-molecular pump according to the third embodiment, the description of operations, advantages, and modifications common to the first and third embodiments is omitted. Only operations, advantages, and modifications of the third embodiment, which differ from those of the first embodiment, are described below.
The first touchdown bearing device 10 includes a deep groove type first full complement ball bearing 130, and a deep groove type second full complement ball bearing 150. The first full complement ball bearing 130 includes the first inner ring 131 serving as the first raceway member, the first outer ring 132 serving as the second raceway member, and a plurality of first balls 133 serving as the first rolling elements, whereas the second full complement ball bearing 150 includes the second inner ring 151 serving as the fourth raceway member, the second outer ring 152 serving as the third raceway member, and a plurality of second balls 153 serving as the second rolling elements.

The first inner ring 131, the first outer ring 132, the second inner ring 151 and the second outer ring 152 are made of a ferromagnetic material, such as a bearing steel (e.g., SUJ2), a stainless steel (e.g., SUS440C), or a tool steel (e.g., SKH4). Further, the first ball 133 and the second ball 153 are made of a ferromagnetic material, such as a bearing steel (e.g., SUJ2), or a tool steel (e.g., SKH4 or AISI (American Iran and Steel Institute) M50 (according to AISI standards) which excels in heat resistance). Incidentally, ferromagnetic materials are materials having the following properties. That is, when placed in a magnetic field, the ferromagnetic material is magnetized in the same direction as the direction of the magnetic field. Moreover, when the magnetic field is removed, the ferromagnetic material still remains magnetic.

In a case where the rings 131, 132, 151 and 152 and the balls 133 and 135 made of ferromagnetic materials are used as the rings and the balls of the first touchdown bearing device 10, as described in the third embodiment, magnetic flux due to a magnetic field of the first and second radial magnetic bearings 7 and 8, which are disposed close to the first touchdown bearing device 10, can penetrate through the first inner ring 131, the first ball 133, and the first outer ring 132. Further, magnetic flux due to a magnetic field of the first and second radial magnetic bearings 7 and 8 can penetrate through the second inner ring 151, the second ball 153, and the second outer ring 152.

Accordingly, when the turbo-molecular pump is operated, and when the radial magnetic bearings 7 and 8 are normally driven, the first ball 133 and the first outer ring 132 can be attracted to the inner ring 131 by electro-magnetic forces. Thus, when the turbo-molecular pump is operated and when the radial magnetic bearings 7 and 8 are normally driven, no relative rotation of the first outer ring 132 with respect to the first inner ring 131 is caused. Therefore, the third embodiment can surely prevent the generation of loud noises (no abnormal sounds), which would be generated at occurrence of a relative rotation of the first outer ring 132 with respect to the first inner ring 131 (actually, such a relative rotation is not caused).

Similarly, when the turbo-molecular pump is operated, and when the radial magnetic bearings 7 and 8 are normally driven, the second ball 153 and the second inner ring 151 can be attracted by electro-magnetic forces to the second outer ring 152 fixed to the housing 2. Thus, when the turbo-molecular pump is operated and when the radial magnetic bearings 7 and 8 are normally driven, no relative rotation of the second inner ring 151 with respect to the second outer ring 152 is caused (i.e., the second inner ring 151 does not rotate in accompaniment with the rotary shaft 3). Therefore, the third embodiment can surely prevent the generation of loud noises (no abnormal sounds), which would be generated at occurrence of a relative rotation of the second inner ring 151 with respect to the second outer ring 152 (actually, such a relative rotation is not caused).

The first inner ring 131 is fit onto and fixed to the outer peripheral cylindrical surface 145 of the rotary shaft 3. The first outer ring 132 is disposed radially outwardly from the first inner ring 131 so as to be opposed to the first inner ring 131. The polarity of first balls 133 are interposed between the raceway groove of the first inner ring 131 and that of the first outer ring 132.

On the other hand, the second inner ring 151 is disposed radially outwardly from the first outer ring 132 so as to be radially opposed to the first outer ring 132. The second outer ring 152 is fit into and fixed to the inner peripheral cylindrical surface 146 of the housing 2. The polarity of second balls 153 is interposed between the raceway groove of the second inner ring 151 and that of the second outer ring 152.

When the radial magnetic bearings 7 and 8 perform normal magnetic control of the rotary shaft 3, the second inner ring 151 is placed radially outwardly from the first outer ring 132. In addition, the second inner ring 151 is radially opposed to the first outer ring 132 in a non-contact manner so as to be spaced apart therefrom.

When the rotation speed of the motor 4 is lowered, so that the regenerative electric power supplied from the motor 4 is lower than electric power necessary for driving the magnetic bearings 7 and 8, the magnetic levitation control of the magnetic bearings 7 and 8 is stopped. When the magnetic levitation control of the magnetic bearings 7 and 8 is stopped, the first touchdown bearing device 10 radially and mechanically supports the rotary shaft 3, instead of the radial magnetic bearings 7 and 8. In addition, the first touchdown bearing device 10 radially and mechanically supports the rotary shaft 3, instead of the radial magnetic bearings 7 and 8. The second touchdown bearing device 11 also serves to axially and mechanically support the rotary shaft 3 when the magnetic levitation control of the magnetic bearing 6 is stopped.

More particularly, the fist touchdown bearing device 10 operates as follows, When the magnetic levitation control of the magnetic bearings 7 and 8 is stopped, the outer peripheral surface of the first outer ring 132 is put into contact with the inner peripheral surface of the second inner ring 151. At a moment when the outer peripheral surface of the first outer ring 132 is put into contact with the inner peripheral surface of the second inner ring 151, i.e., at the instant when a touchdown of the rotary shaft 3 to the first touchdown bearing device 10 is caused, the rotation speed of the first outer ring 132 and that of the second inner ring 151 are rapidly increased to substantially half the rotation speed of the rotary shaft 3 at the touchdown by friction.

That is, because the first inner ring 131 is fixed to the rotary shaft 3, while the second outer ring 152 is fixed to the housing 2 that is a stationary member, both of the rotation speed of the first inner ring 131 with respect to the first outer ring 132 and that of the second inner ring 151 with respect to the second outer ring 152 at a moment, at which a touchdown of the rotary shaft to the first touchdown bearing device 10 is caused, are reduced to substantially half the rotation speed of the rotary shaft 3 at the touchdown. Thus, in the first touchdown bearing device 10 according to the invention, both of the rotation speed of the inner ring 131 with respect to the outer ring 132 and the rotation speed of the inner ring 151 with respect to the outer ring 152, which are instantaneously generated at the touchdown in the first and second full complement ball bearings 130 and 150, respectively, can rapidly be reduced to about half the rotation speed of the rotary shaft 3 at the touchdown.

According to the turbo-molecular pump that is the third embodiment, the contact of the outer ring 132 with the inner ring 151 enables the housing 2 to receive a load from the rotary shaft 3 via the first inner ring 131, the first ball 133, the first outer ring 132, the second inner ring 151, the second ring 153, and the first outer ring 152. Thus, at a touchdown, both of the rotation speed of the first inner ring 131 with respect to the first outer ring 132 and that of the second inner ring 151 with respect to the second outer ring 152 can rapidly be reduced to about half the rotation speed of the rotary shaft 3 at the touchdown, as compared with the conventional touchdown bearing device.

Accordingly, the first ball 133 can be prevented from being locked to at least one of the first outer ring 132 and the first inner ring 131 at a touchdown. Also, the second ball 135 can be prevented from being locked to at least one of the second outer ring 152 and the second inner ring 151 at the touchdown. Consequently, the lifetime of the touchdown bearing device 10 can dramatically be lengthened, as compared with the conventional touchdown bearing device.

Further, because each of the relative rotation speed between the first inner ring 131 and the first outer ring 132 and that between the second inner ring 151 and the second outer ring 152 is considerably reduced to about half the associated rotation speed of the conventional touchdown bearing device, the seizure of the first full component ball bearing 130 and that of the second full component ball bearing 150 can greatly be suppressed. The first touchdown bearing device 10 can dramatically increase the upper limit of the rotation speed of the rotary shaft 3, at which a touchdown can be caused.

According to the turbo-molecular pump that is the third embodiment, even in a case where the seizure of at least one of the outer ring 132, the first inner ring 131, and the first balls 133 is caused, so that a normal relative rotation of the first inner ring 131 with respect to the outer ring 132 is not normally performed, the rotary shaft 3 can rotatably be supported against the housing 2 by the second inner ring 151, the second outer ring 152, and the second balls 153. Conversely, even in a case where the seizure of at least one of the second outer ring 152, the second inner ring 151, and the second balls 153 is caused, so that a normal relative rotation of the inner ring 151 with respect to the outer ring 152 is not normally performed, the rotary shaft 3 can rotatably be supported against the housing 2 by the first inner ring 131, the first outer ring 132, and the first balls 133.

Accordingly, as compared with the conventional configuration, i.e., the configuration in which the touchdown bearing device consists of the single inner ring, the single outer ring, and the rolling elements interposed between the outer ring and the inner ring, the third embodiment can considerably reduce the possibility of occurrences of the contact between the rotary shaft 3 and each of the magnetic bearings 7 and 8 and the contact between the rotor 20 and the stator 21, which constitute the motor 4.

According to the touchdown bearing device 10 of the third embodiment, each of the rotation speed of the first inner ring 131 with respect to the outer ring 132 and that of the second inner ring 151 with respect to the second outer ring 152 can be reduced to about half that of the inner ring with respect to the outer ring in the conventional touchdown bearing device consisting of the inner and outer rings and the balls.

Moreover, an axial load applied from the rotary shaft 3 is generated when the rotary shaft 3 is brought into biased contact with the first touchdown bearing device 10 due to the runout of the rotary shaft 3. Both of a part of the axial load, which is to be allotted and applied to the first outer ring 132, the first inner ring 131, and the first balls 133, and another part of the axial load, which is to be allotted and applied to the second outer ring 152, the first inner ring 151, and the second balls 153, are reduced to small values that are about half the values of the parts of the axial load in the conventional touchdown bearing device, respectively, in which the rolling bearing is arranged in a single stage.

Accordingly, as compared with the possibility of occurrence of seizure of the inner or outer ring or the ball in the conventional touchdown bearing, the third embodiment can rapidly reduce the possibility of occurrence of seizure of the ring 131, 132, 151, or 152, or the ball 133 or 153 to about half. Consequently, the lifetime of the first touchdown bearing device 10 can considerably be shortened. Additionally, as compared with the conventional touchdown bearing, the touchdown bearing according to the third embodiment of the invention can greatly increase the upper limit of the rotation speed of the rotary shaft 3, at which a touchdown can be caused, can dramatically be increased.

Further, the touchdown bearing device 10 according to the third embodiment includes the deep groove type first full complement bearing 130 fixed to the rotary shaft 3, and the deep groove type second full complement ball bearing 150 fixed to the housing 2. However, according to the third embodiment, at least one of the two rolling bearings that the touchdown bearing device 10 has can be an angular type ball bearing, instead of a deep groove type ball bearing. In this case, it is preferable that a large axial load can be applied to the touchdown bearing device.

In the first touchdown bearing device 10 of the third embodiment, both the two rolling bearings are full complement ball bearings 130 and 150, which have no retainers. According to the third embodiment, at least one of the two rolling bearings that the touchdown bearing devices have can be a ball bearing having a retainer, instead of a full complement ball bearing having no retainer. At least one of the four rolling bearings that the touchdown bearing devices have can be a rolling bearing, such as a cylindrical roller bearing and a tapered roller bearing, other than a ball bearing.

Further, the first touchdown bearing device 10 according to the third embodiment uses the first balls 133, and the second balls 153, which are made of a ferromagnetic material. According to the invention, a ball made of a nonmagnetic ceramic material, such as silicon nitride (Si₃N₄), can be used as at least one of the first balls, and the second balls. In the case of using the ceramic ball, the durability of the balls can be enhanced. Additionally, according to the invention, the material of all the inner and outer rings and the balls can be a stainless steel. In this case, the cost of the ball bearing can considerably be reduced.

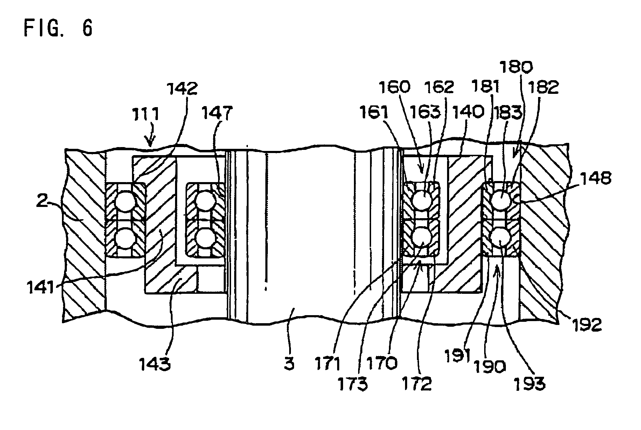

FIG. 6 is a schematic cross-sectional view illustrating the second touchdown bearing device 11 shown in FIG. 1 and the vicinity thereof.

The second touchdown bearing device 11 includes a second outer ring 161 includes an angular type third full complement ball bearing 60 provided at one side (an upper side, as viewed in FIG. 6) in an axial direction thereof and at an inner side in a radial direction thereof, an angular type fourth full complement ball bearing 170 provided at the other side (a lower side, as viewed in FIG 6) in the axial direction thereof and at the inner side in the radial direction thereof, an angular type fifth full complement ball bearing 180 provided at the one side in an axial direction thereof and at an outer side in a radial direction thereof, an angular type sixth full complement ball bearing 190 provided at the other side in the axial direction thereof and at the outer side in the radial direction thereof. The third full complement ball bearing 160 includes a third inner ring 161, a third outer ring 162, and a plurality of third balls 163. The fourth full complement ball bearing 170 includes a fourth inner ring 171, a fourth outer ring 172, and a plurality of fourth balls 173. The fifth full complement ball bearing 180 includes a fifth inner ring 181, a fifth outer ring 182, and a plurality of fifth balls 183. The sixth full complement ball bearing 190 includes a sixth inner ring 191, a sixth outer ring 192, and a plurality of sixth balls 193.

The plurality of third balls 163 are arranged between the raceway groove of the third inner ring 161 and that of the third outer ring 162. The polarity of fourth balls 173 are arranged between the raceway groove of the fourth inner ring 171 and that of the fifth outer rig 182. The plurality of sixth balls 193 are arranged between the raceway groove of the sixth inner ring 191 and that of the sixth outer ring 192.

The third inner ring 161 and the fourth inner ring 171 are axially arranged and are fit onto and fixed to an outer peripheral cylindrical surface 147 of the rotary shaft. Consequently, the third full complement ball bearing 160 and the fourth full complement ball bearing 170 are provided axially in parallel to each other. The fifth outer ring 182 and the sixth outer ring 192 are axially arranged and are fit into and fixed to the inner peripheral cylindrical surface 148 of the housing 2. Consequently, the fifth full complement ball bearing 180 and the sixth full complement ball bearing 190 are axially arranged in parallel to each other. Additionally, the fifth inner ring 181 of the fifth full complement bearing 180 and the sixth inner ring 191 of the sixth full complement bearing 190 are fixed to a contact member 140.

That is, the second touchdown bearing device 11 includes the third inner ring 161 and the fourth inner ring 141, which serve as the first raceway member, the third outer ring 162 and the fourth outer ring 172, which serve as the second raceway member, a plurality of third balls 163 and a plurality of fourth balls 173, which serve as the first rolling elements, the fifth inner ring 181 and the sixth inner ring 191, which serve as the fourth raceway member, and the fifth outer ring 182 and the sixth outer ring 192, which serve as the third raceway member.

The contact member 140 includes a cylindrical portion 141, a diameter-enlarged portion 142 whose diameter increases at one side in an axial direction of the cylindrical portion 141, and a diameter-reduced portion 143 whose diameter decreases at the other side in an axial direction of the cylindrical portion 141. The diameter-enlarged portion 142 abuts against an end surface at the one side in the axial direction of the fifth inner ring 181. The outer peripheral surface of the cylindrical portion 141 abuts against the inner peripheral surface of the fifth inner ring 181 and the inner peripheral surface of the sixth inner ring 191.

When the radial magnetic bearings 7 and 8 and the axial magnetic bearing 6 normally perform the magnetic control of the rotary shaft 3, the contact member 140 is placed radially and outwardly from the third outer ring 162 and the fourth outer ring 172. The contact member 140 is opposed to the third outer ring 162 and the fourth outer ring 172 radially and axially in a non-contact manner so as to be spaced from the rings 162 and 172.

When at least one of the magnetic levitation control performed using the radial magnetic bearings 7 and 8 and that performed using the axial magnetic bearing 6 is stopped, at least one of the contact between the outer peripheral surface of the third outer ring 162 and the inner peripheral surface of the cylindrical portion 141, that between the outer peripheral surface of the fourth outer ring 72 and the inner peripheral surface of the cylindrical portion 141, and that between an end surface at the other side in the axial direction of the fourth outer ring 172 and the diameter-reduced portion 143 is caused. Consequently, the rotary shaft 3 can mechanically be supported against the housing 2 in at least one of a radial direction and an axial direction.

According to the turbo-molecular pump that is the third embodiment, the second touchdown bearing device 11 can considerably suppress the relative rotation speed of each of the inner rings 161, 171, 181 and 191 with respect to an associated one of the outer rings 162, 172, 182 and 192 instantaneously generated in an associated one of the third, fourth, fifth, and sixth full complement ball bearings 160, 170, 180 and 190 upon a touchdown, similarly to the first touchdown bearing device 10. The second touchdown bearing device 11 can rapidly reduce the relative rotation speed of each of the inner rings 161, 171, 181, and 191 to about half the rotation speed of the rotary shaft 3 at the touchdown. Consequently, the lifetime of the second touchdown bearing device 11 can dramatically be lengthened.

Furthermore, because the second touchdown bearing device 11 can rapidly reduce the relative rotation speed of each of the inner rings 161, 171, 181, and 191 to about half the rotation speed of the rotary shaft 3 at the touchdown, the second touchdown bearing device 11 can dramatically increase the upper limit to the rotation speed of the rotary shaft 3, at which a touchdown can be caused.

According to the turbo-molecular pump that is the third embodiment, the rotary shaft 3 can be rotatably supported against the housing 2 by the fifth inner ring 181, the fifth outer ring 182, the fifth balls 183, the sixth inner ring 191, the sixth outer ring 192, and the sixth balls 193 even when the seizure of at least one of a member including the third outer ring 162, the third inner ring 161, the third balls 163, and another member including the fourth outer ring 172, the fourth inner ring 171, and the fourth balls 173, so that at least one of the rotation of the third inner ring 161 with respect to the third outer ring 161 and that of the fourth inner ring 171 with respect to the fourth outer ring 172 is not normally performed. Conversely, the rotary shaft 3 can be rotatably supported against the housing 2 by the third inner ring 161, the third outer ring 162, the third balls 163, the fourth inner ring 171, the fourth outer ring 172, and the fifth balls 173 even when the seizure of at least one of a member including the fifth outer ring 182, the fifth inner ring 181, and the fifth balls 183, and another member including the sixth inner ring 191, the sixth outer ring 192, and the sixth balls 193 is caused, so that at least one of the rotation of the fifth inner ring 181 with respect to the fifth outer ring 182 and that of the sixth inner ring 191 with respect to the sixth outer ring 192 is not normally performed.

The second touchdown bearing device 11 according to the third embodiment can considerably suppress the relative rotation speed of each of the inner rings 161, 171, 181 and 191 with respect to an associated one of the outer rings 162, 172, 182 and 192 instantaneously generated in an associated one of the third, fourth, fifth and sixth full component ball bearings 160, 170, 180 and 190 upon a touchdown, similarly to the first touchdown bearing device 10. The second touchdown bearing device 11 can rapidly reduce the relative rotation speed of each of the inner rings 163 and 173 and the intermediate rings 162 and 172 to about half the rotation speed of the rotary shaft 3 at the touchdown. Accordingly, the lifetime of the second touchdown bearing device 11 can dramatically be lengthened.

Further, because the second touchdown bearing device 11 can greatly reduce the relative rotation speed of each of the inner rings 161, 171, 181 and 191 to about half the rotation speed of the rotary shaft 3 at the touchdown, the second touchdown bearing device 11 can dramatically increase the upper limit to the rotation speed of the rotary shaft 3, at which a touchdown can be caused,

In the second touchdown bearing device 11 of the third embodiment, both the two rolling bearings are full complement ball bearings 160, 170, 180 and 190, which have no retainers. According to the third embodiment, at least one of the two rolling bearings that the touchdown bearing device has can be a ball bearing having a retainer, instead of a full complement ball bearing having no retainer. At least one of the four rolling bearings that the touchdown bearing device has can be a rolling bearing, such as a cylindrical roller bearing and a tapered roller bearing, other than a ball bearing.

Furthermore, the second touchdown bearing device 11 according to the third embodiment uses the balls 163,173, 183 and 193, which are made of a ferromagnetic material. According to the invention, a ball made of a nonmagnetic ceramic material, such as silicon nitride (Si₃N₄), can be used as at least one of the third balls, the fourth balls, the fifth balls, and the sixth balls. In the case of using the ceramic ball, the durability of the balls can be enhanced. Additionally, according to the invention, the material of all the inner and outer rings and the balls can be a stainless steel. In this case, the cost of the ball bearing can considerably be reduced.

### Fourth Embodiment

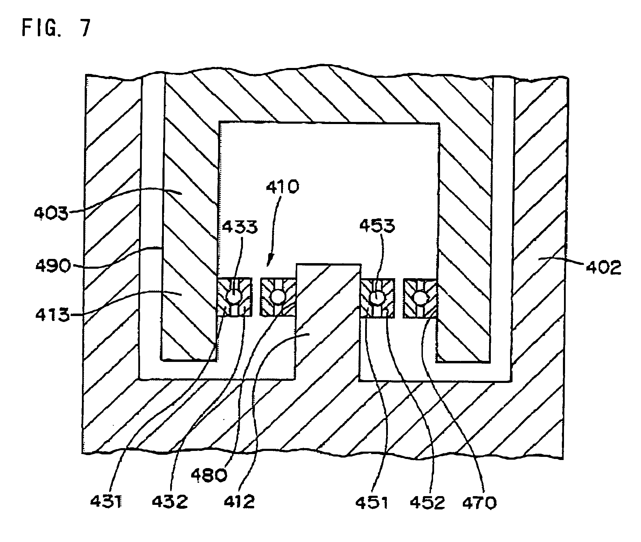

FIG. 7 is a partially schematic cross-sectional view illustrating a turbo-molecular pump according to a fourth embodiment of the invention.

In the following description of the turbo-molecular pump according to the fourth embodiment, the description of operations, advantages, and modifications common to the third and fourth embodiments is omitted. Only operations, advantages, and modifications of the fourth embodiment, which differ from those of the third embodiment, are described below.

This turbo-molecular pump includes a housing 402, a rotary shaft 403, and a touchdown bearing device 410 according to the fourth embodiment of the invention.

The rotary shaft 403 has a tubular portion 413 provided at one of end portions thereof. Further, the housing 402 has a cylindrical portion 412 extending in an axial direction of the tubular portion 413, which is provided in the tubular portion 413. The touchdown bearing device 410 according to the fourth embodiment of the invention is provided between the tubular portion 413 and the cylindrical portion 412.

The touchdown bearing device 410 includes a first outer ring 431 serving as the first raceway ring, a first inner ring 432 serving as the second raceway ring, a plurality of first balls 433 serving as the first rolling elements, a second inner ring 451 serving as the third raceway ring, a second outer ring 452 serving as the fourth raceway ring, and a plurality of second balls 453 serving as the second rolling elements.

The first outer ring 431 is fit into and fixed to an inner peripheral cylindrical surface 470 of the tubular portion 413 of the rotary shaft 403. The first inner ring 432 is disposed so as to extend radially inwardly from the first outer ring 431 and as to be radially opposed to the first outer ring 431. The plurality of first balls 433 are circumferentially arranged between the first outer ring 431 and the first inner ring 432 at intervals from one another.

The second inner ring 451 is fit onto and fixed to an outer peripheral cylindrical surface 480 of the cylindrical portion 412 of the housing 402. The second outer ring 452 is disposed so as to extend radially outwardly from a second inner ring 451 and as to be radially opposed to the second inner ring 451. The plurality of second balls 453 are circumferentially arranged between the raceway groove of the second inner ring 451 and that of the second outer ring 452 at intervals from one another.

In the above embodiments, the touchdown bearing devices according to the invention are mounted in the turbo-molecular pump. However, apparently, the touchdown bearing device according to the invention can be mounted in a mere vacuum pump, instead of the turbo-molecular pump.

## Claims

1. A turbo-molecular pump comprising:
a shaft;
a housing opposed to the shaft so as to be radially spaced from the shaft;
a magnetic bearing that magnetically supports the shaft against the housing in a non-contact manner,
a touchdown bearing device that is provided between the housing and the shaft and mechanically supports the shaft when the magnetic bearing does not normally operate; and
a motor that performs relative rotation driving of the shaft with respect to the housing,
wherein the touchdown bearing device includes:
a first raceway member that is fixed to the housing and that includes a raceway surface;
a second raceway member that is opposed to the first raceway member via a clearance and includes a raceway surface;
an intermediate raceway member that is provided between the first raceway member and the second raceway member and includes a first raceway surface opposed to the raceway surface of the first raceway member and a second raceway surface opposed to the raceway surface of the second raceway member;
first rolling elements provided between the raceway surface of the first raceway member and the first raceway surface of the intermediate raceway member, and
second rolling elements provided between the second raceway surface of the intermediate raceway member and the raceway surface of the second raceway member, and
wherein the shaft and the second raceway member are in a non-contact state when the magnetic bearing normally operates, and the shaft is supported against the housing by supporting the shaft with the second raceway member when the magnetic bearing does not normally operate.

2. A touchdown bearing device provided between a shaft and a housing, the touchdown bearing device comprising:
a first raceway member that is fixed to the housing and includes a raceway surface;
a second raceway member that is opposed to the shaft so as to be spaced from the shaft, is opposed to the first raceway member via a clearance, and includes a raceway surface;
an intermediate raceway member that is provided between the first raceway member and the second raceway member and includes a first raceway surface opposed to the raceway surface of the first raceway member and a second raceway surface opposed to the raceway surface of the second raceway member;
first rolling elements provided between the raceway surface of the first raceway member and the first raceway surface of the intermediate raceway member; and
second rolling elements provided between the second raceway surface of the intermediate raceway member and the raceway surface of the second raceway member,
wherein when the shaft and the second raceway member are put into contact with each other due to change in a relative position between the shaft and the housing, the shaft is supported against the housing by supporting the shaft with the second raceway member.

3. A turbo-molecular pump comprising:
a shaft;
a housing opposed to the shaft so as to be radially spaced from the shaft;
a magnetic bearing that magnetically supports the shaft against the housing in a non-contact manner,
a touchdown bearing device that is provided between the shaft and the housing and mechanically supports the shaft when the magnetic bearing does not normally operate; and
a motor that performs relative rotation driving of the shaft with respect to the housing,
wherein the touchdown bearing device includes:
a first raceway member that is fixed to the shaft and includes a raceway surface;
a second raceway member that is opposed to the first raceway member via a clearance and includes a raceway surface;
an intermediate raceway member that is provided between the first raceway member and the second raceway member and includes a first raceway surface opposed to the raceway surface of the first raceway member and a second raceway surface opposed to the raceway surface of the second raceway member;
first rolling elements provided between the raceway surface of the first raceway member and the first raceway surface of the intermediate raceway member, and
second rolling elements provided between the second raceway surface of the intermediate raceway member and the raceway surface of the second raceway member, and
wherein the housing and the second raceway member are in a non-contact state when the magnetic bearing normally operates, and the shaft is supported against the housing by supporting the second raceway member with the housing when the magnetic bearing does not normally operate.

4. A touchdown bearing device provided between a shaft and a housing, the touchdown bearing device comprising:
a first raceway member that is fixed to the shaft and includes a raceway surface;
a second raceway member that is opposed to the housing so as to be spaced from the housing, is opposed to the first raceway member via a clearance, and includes a raceway surface;
an intermediate raceway member that is provided between the first raceway member and the second raceway member and includes a first raceway surface opposed to the raceway surface of the first raceway member and a second raceway surface opposed to the raceway surface of the second raceway member;
first rolling elements provided between the raceway surface of the first raceway member and the first raceway surface of the intermediate raceway member; and
second rolling elements provided between the second raceway surface of the intermediate raceway member and the raceway surface of the second raceway member,
wherein when the housing and the second raceway member are put into contact with each other due to change in a relative position between the shaft and the housing, the shaft is supported against the housing by supporting the second raceway member with the housing.

5. A turbo-molecular pump comprising:
a shaft;
a housing opposed to the shaft so as to be radially spaced from the shaft;
a magnetic bearing that magnetically supports the shaft against the housing in a non-contact manner;
a touchdown bearing device that is provided between the shaft and the housing and mechanically supports the shaft when the magnetic bearing does not normally operate; and
a motor that performs relative rotation driving of the shaft with respect to the housing,
wherein the touchdown bearing device includes:
a first raceway member fixed to the shaft;
a second raceway member opposed to the first raceway member;
first rolling elements provided between the first raceway member and the second raceway member;
a third raceway member fixed to the housing;
a fourth raceway member opposed to the third raceway member; and
second rolling elements provided between the third raceway member and the fourth raceway member, and
wherein the second raceway member and the fourth raceway member are in a non-contact state when the magnetic bearing normally operates, and the shaft is supported against the housing by supporting the second raceway member with the fourth raceway member when the magnetic bearing does not normally operate.

6. A touchdown bearing device provided between a shaft and a housing, the touchdown bearing device comprising:
a first raceway member fixed to the shaft;
a second raceway member opposed to the first raceway member;
first rolling elements provided between the first raceway member and the second raceway member;
a third raceway member fixed to the housing;
a fourth raceway member that is opposed to the second raceway member so as to be spaced from the second raceway member and that is opposed to the third raceway member, and
second rolling elements provided between the third raceway member and the fourth raceway member,
wherein when the second raceway member and the fourth raceway member are put into contact with each other due to change in a relative position between the shaft and the housing, the shaft is supported against the housing by supporting the second raceway member with the fourth raceway member.
